(19) Europäisches Patentamt

European Patent Office

Office européen des brevets

(11) Veröffentlichungsnummer: **0 268 768**
B1

## (12) EUROPÄISCHE PATENTSCHRIFT

(45) Veröffentlichungstag der Patentschrift:
05.12.90

(51) Int. Cl.⁵: **G01N 27/417**, G01N 27/30

(21) Anmeldenummer: 87113452.4

(22) Anmeldetag: 15.09.87

(54) Sensor zur Überwachung von Wasserstoffkonzentrationen in Gasen.

(30) Priorität: 21.11.86 DE 3639802

(43) Veröffentlichungstag der Anmeldung:
01.06.88 Patentblatt 88/22

(45) Bekanntmachung des Hinweises auf die Patenterteilung:
05.12.90 Patentblatt 90/49

(84) Benannte Vertragsstaaten:
CH DE FR GB IT LI

(56) Entgegenhaltungen:
DE-A- 2 918 932
DE-A- 3 110 571
GB-A- 2 128 751
US-A- 4 560 444

PROCEEDINGS OF THE INTERNATIONAL MEETING ON
CHEMICAL SENSORS 1983, N. MIURA et al.: "Proton
conductor sensor for H2 and CO operative at room
temperature", Seiten 233-238

(73) Patentinhaber: Battelle-Institut e.V., Am
Römerhof 35 Postfach 900 160,
D-6000 Frankfurt/Main 90(DE)

(72) Erfinder: Ammende, Sonja, Hedwig-Dransfeld-Strasse 3,
D-6000 Frankfurt am Main 90(DE)
Erfinder: Erdmann, Hartmut, Dipl.-Ing., Sodener
Strasse 10, D-6374 Steinbach(DE)
Erfinder: Etzkorn, Heinz-Werner, Dr.,
Schumannstrasse 16, D-6392 Neu Anspach(DE)
Erfinder: Zucholl, Klaus, Dr., Niederfeldstrasse 123,
D-6800 Mannheim(DE)

(74) Vertreter: Sartorius, Peter, Dipl.-Ing., Battelle-Institut
e.V. Abteilung Patente Am Römerhof 35,
D-6000 Frankfurt am Main 90(DE)

## Beschreibung

Die Erfindung betrifft einen Sensor zur Überwachung von Wasserstoffkonzentrationen in Gasen, wobei ein Festelektrolyt vorgesehen ist, an dem eine dem zu überwachenden Gas ausgesetzte Nachweiselektrode aus einem der Platinmetalle bzw. deren Oxyde sowie eine Referenzelektrode anliegt.

Einen derartigen Sensor beschreibt die GB-A 2 128 751.

Der Nachweis beruht dort auf einer Protonenreaktion. Damit ist aber der Nachteil verbunden, daß der Sensor nicht sehr temperaturstabil ist.

Es sind auch andere Wasserstoffsensoren bekannt. Sie arbeiten im allgemeinen mit halbleitenden Oxiden. Nachteilig hierbei ist es, daß die halbleitenden Oxide auf eine Temperatur von mehreren einhundert Grad Celsius erhitzt werden müssen, daß die Ansprechzeit des Sensors sehr langsam ist und daß auch eine hohe Querempfindlichkeit für andere Gase gegeben ist.

Der Erfindung liegt die Aufgabe zugrunde, einen Sensor zur Überwachung von Wasserstoffkonzentrationen in Gasen vorzuschlagen, der sehr preisgünstig hergestellt werden kann und sich insbesondere durch eine sehr geringe Ansprechzeit für den nachzuweisenden Wasserstoff auszeichnet, verbunden mit einer möglichst geringen Querempfindlichkeit für andere, nicht nachzuweisende Gase.

Zur Lösung dieser Aufgabe ist die Erfindung dadurch gekennzeichnet, daß der Festelektrolyt aus Nasicon, Titsicon, Khibinskit, Wadeit oder β-Al$_2$O$_3$ besteht, daß der Festelektrolyt und die Elektroden in Dickschichttechnik auf ein Substrat aufgebracht sind, daß die Referenzelektrode aus einer Natrium-Wolframbronze besteht.

Wird die Nachweiselektrode von wasserstoffhaltigem Gas umspült, so reagiert der Wasserstoff elektrochemisch mit dem Sensor. Das an den Elektroden sich einstellende elektrische Potential bzw. die Potentialänderung kann von einer Nachfolgeelektronik ausgewertet bzw. weiterverarbeitet werden. Die Erfindung macht sich hierbei also die Tatsache zunutze, daß der in dem zu überwachenden Gas enthaltene Wasserstoff an der Nachweiselektrode chemisch reagiert und dadurch eine elektromotorische Kraft am Sensor erzeugt wird, die das Nachweissignal abgibt.

Weil der Festelektrolyt und die Elektroden in Dickschichttechnik auf das Substrat aufgebracht sind, läßt sich der erfindungsgemäße Sensor in großen Stückzahlen und sehr preisgünstig herstellen.

Weil die Referenzelektrode aus einer Natriumwolframbronze besteht, wird das Potential zwischen Bezugselektrode und Festelektrolyt konstant gehalten. Natriumwolframbronze ist ein Material mit stabiler Na-Ionenaktivität.

Bevorzugt wird der Sensor mit einer Abdeckung aus Glas, Kunststoff oder anderem geeigneten Material versiegelt, die zumindest einen Teil der Oberfläche der Nachweiselektrode frei läßt. Die Abdeckung braucht nur die Oberseite des Sensors abzudecken, sofern dessen Unterseite mit dem Substrat abgedeckt ist.

Vorteilhaft ist es ferner, daß die Nachweiselektrode aus Platin, Palladium oder Palladiumoxyd gebildet ist. Palladium hat die größte Wasserstoffdurchlässigkeit der Platinmetalle und dadurch erhält man eine hohe Selektivität des Sensors.

Die Erfindung wird im folgenden anhand von Ausführungsbeispielen näher erläutert, aus denen sich weitere wichtige Merkmale ergeben. Es zeigt:

Fig. 1 schematisch einen Sensor nach der Erfindung in einer ersten Ausführungsform in planarer Anordnung der Elektroden;

Fig. 2 schematisch eine andere Ausführungsform des erfindungsgemäßen Sensors wobei die Elektroden transversal angeordnet sind.

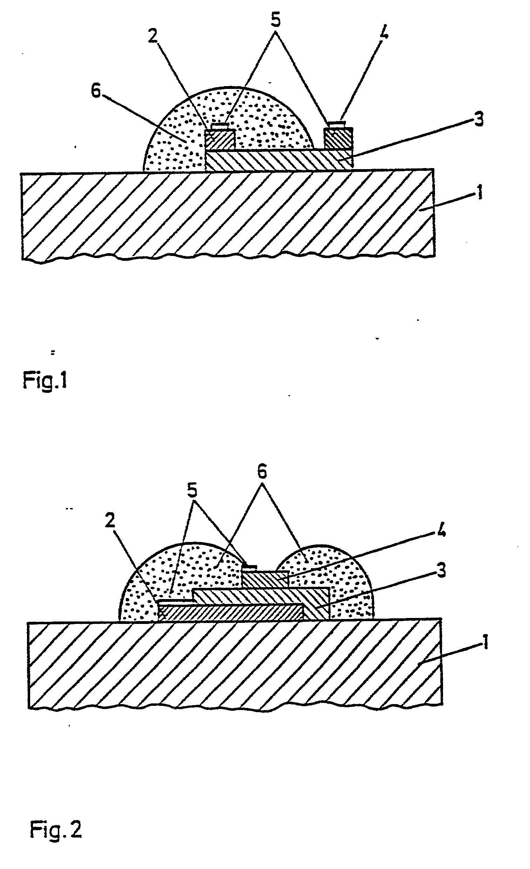

Auf einem handelsüblichen Substratmaterial 1, z.B. 96% Al$_2$O$_3$, werden in mehreren Arbeitsschritten in planarer (Fig. 1) oder transversaler (Fig. 2) Anordnung die Elektroden und der Festelektrolyt in Dickschichttechnik aufgedruckt, nämlich eine Referenzelektrode 2 der Festelektrolyt 3 und die Nachweiselektrode 4. Die Elektroden 2, 4 sind mit üblichen Anschlußleitern oder Kontakten 5 versehen. Die Nachweiselektrode 4 kann z.B. aus Platin, Palladium oder aus Palladiumoxyd gebildet sein. Die Referenzelektrode 2 besteht aus Materialien mit konstanter Na-Ionenaktivität, nämlich aus einer Natriumwolframbronze.

Nach jedem Druckvorgang wird die jeweilige Schicht unter definierten Bedingungen gesintert bzw. gebrannt oder oxidiert.

In einem letzten Arbeitsschritt kann nach der Kontaktierung der Elektroden 2, 4 mit den Anschlußleitern 5 der Festelektrolyt 3 und ein Teil der Oberfläche der Nachweiselektrode 4 mit einer Abdeckung 6 aus Glas oder Kunststoff versiegelt werden.

Als Ausgangsmaterial für die Elektroden können kommerziell erhältliche Platen- oder Palladium-Pasten verwendet werden.

Eine Druckpaste für den Festelektrolyten erhält man, wenn z.B. Nasiconelektrolytpulver mit einem für Dickschichtpasten gebräuchlichen Vehikel, z.B. Ethylzellulose mit Terpineol im richtigen Verhältnis vermischt werden. Das Nasiconelektrolytpulver wird beispielsweise durch Sintern von Pulvermischungen und anschließendes Mahlen oder auch nach dem Solgelverfahren hergestellt.

Zur Abdeckung eignen sich handelsübliche Abdeckmaterialien (Silicon, Lacke) oder gedruckte Schichten handelsüblicher Dielektrikpasten oder Overglaspasten.

Der Festelektrolyt aus Nasicon hat die chemische Formel Na$_{1+}$Zr$_2$Si$_x$P$_{3-x}$O$_{12}$ mit $0 \leq x -< 3$. Bei Versuchen wurde x = 2,2 bzw. x = 2 benutzt und diese Versuche ergaben gute Ergebnisse.

Titzikon ist ist Na$_{3,1}$Zr$_{1,55}$Si$_{2,3}$P$_{0,7}$O$_{11}$.

Khibinskit ist K$_2$ZrSi$_2$O$_7$.

Wadeit ist K$_2$ZrSi$_3$O$_9$.

Es ist somit ersichtlich, daß durch die elektrochemische Reaktion zwischen dem nachzuweisenden Wasserstoffgas und dem erfindungsgemäßen Sensor dieser sehr schnell reagiert und über seine Anschlußleiter nach kurzer Ansprechzeit ein Signal abgibt, welches dann weiter verarbeitet werden kann, gegebenenfalls in einer ebenfalls in Dickschichttechnologie erstellten Nachfolgeelektronik.

## Patentansprüche

1. Sensor zur Überwachung von Wasserstoffkonzentrationen in Gasen, wobei ein Festelektrolyt (3) vorgesehen ist, an dem eine dem zu überwachenden Gas ausgesetzte Nachweiselektrode (4) aus einem der Platinmetalle bzw. deren Oxide sowie eine Referenzelektrode (2) anliegt, dadurch gekennzeichnet, daß der Festelektrolyt (3) aus Nasicon, Titsicon Khibinskit, Wadeit oder $\beta$–$Al_2O_3$ besteht, daß der Festelektrolyt (3) und die Elektroden (2, 4) in Dickschichttechnik auf ein Substrat (1) aufgebracht sind und daß die Referenzelektrode (2) aus einer Natrium-Wolframbronze besteht.

2. Sensor nach Anspruch 1, dadurch gekennzeichnet, daß der Sensor mit einer Abdeckung (6) versiegelt ist, die zumindest einen Teil der Oberfläche der Nachweiselektrode frei läßt.

3. Sensor nach Anspruch 1 oder 2, dadurch gekennzeichnet, daß die Nachweiselektrode (4) aus Platin, Palladium oder Palladiumoxyd gebildet ist.

## Claims

1. A sensor for monitoring levels of concentration of hydrogen in gases, wherein there is provided a solid electrolyte (3) against which bears a detection electrode (4) which is exposed to the gas to be monitored and which comprises one of the platinum metals or oxides thereof, and a reference electrode (2), characterised in that the solid electrolyte (3) comprises Nasicon, Titsicon, Khibinskit, Wadeit or $\beta$–$Al_2O_3$, that the solid electrolyte (3) and the electrodes (2, 4) are applied using a thick film technique to a substrate (1) and that the reference electrode (2) comprises a sodium tungsten bronze.

2. A sensor according to claim 1 characterised in that the sensor is sealed with a cover (6) which leaves free at least a part of the surface of the detection electrode.

3. A sensor according to claim 1 or claim 2 characterised in that the detection electrode (4) comprises platinum, palladium or palladium oxide.

## Revendications

1. Capteur pour le contrôle de concentrations d'hydrogène dans des gaz, dans lequel est disposé un électrolyte solide (3) auquel sont adjacentes une électrode de détection (4) à base d'un des métaux de la famille du platine ou de leurs oxydes, exposée aux gaz à contrôler, ainsi qu'une électrode de référence, caractérisé en ce que l'électrolyte solide (3) est constitué de nasicon, titsicon, khibinskite, wadéite ou $Al_2O_3$ $\beta$, en ce que l'électrolyte solide (3) et les électrodes (2, 4) sont appliqués sur un support dans la technique des couches épaisses, en ce que l'électrode de référence (2) est constituée d'un bronze de tungstène-sodium.

2. Capteur selon la revendication 1, caractérisé en ce que le capteur est scellé à l'aide d'un recouvrement (6) qui laisse libre au moins une partie de la surface de l'électrode de détection.

3. Capteur selon la revendication 1 ou 2, caractérisé en ce que l'électrode de détection (4) est constituée de platine, palladium ou oxyde de palladium.

Fig.1

Fig. 2